# FASCICULE DE BREVET EUROPEEN

(11) **EP 0 869 017 B1**
(45) Date de publication et mention de la délivrance du brevet: **28.05.2008**
(21) Numéro de dépôt: 98105221.0
(22) Date de dépôt: 23.03.1998
(51) Int. Cl.: B60C 15/00, B60C 15/06

(54) **Pneumatique à armature de carcasse perfectionnée**
Reifen mit verbesserter Karkasse
Tyre with improved carcass

(30) Priorité: 02.04.1997 FR 9704246
(43) Date de publication de la demande: 07.10.1998
(73) Titulaire: Compagnie Générale des Etablissements MICHELIN-MICHELIN & CIE, 63040 Clermont-Ferrand Cedex 09 (FR)
(72) Inventeur: Barraud, Jacques, Bâtiment C, 63100 CLermont-Ferrand (FR); Costa Pereira, Pedro, 6300 Clermont-Ferrand (FR); Denoueix, Jean-Yves, 63112 Blanzat (FR); Guerinon, Bernard, 63100 Clermont-Ferrand (FR); Herbelleau, Yves, 63200 Riom (FR)
(74) Mandataire: Dequire, Philippe Jean-Marie Denis

(56) Documents cités:
- EP-A- 0 026 315
- EP-A- 0 066 225
- EP-A- 0 582 196
- EP-A- 0 751 015
- GB-A- 990 524
- PATENT ABSTRACTS OF JAPAN vol. 017, no. 077 (M-1367), 16 février 1993 & JP 04 278803 A (TOYO TIRE & RUBBER CO LTD), 5 octobre 1992,
- PATENT ABSTRACTS OF JAPAN vol. 096, no. 005, 31 mai 1996 & JP 08 002218 A (BRIDGESTONE CORP), 9 janvier 1996,

## Description

L'invention concerne les flancs et les bourrelets des pneumatiques et notamment les gommes de liaison en contact avec les fils de renforcement de la ou des carcasses ancrées dans les bourrelets.

Les bourrelets des pneumatiques comportent une partie très rigide pour leur permettre de satisfaire les fonctions de contact avec la jante et d'ancrage des carcasses. Le contact avec notamment les crochets de jante doit se faire, en roulage, avec le minimum de glissements pour limiter les problèmes d'usure par frottement contre la jante. Les flancs sont, au contraire, très souples. Il est important d'éviter toute variation brutale de rigidité entre les bourrelets et les flancs, notamment pour garantir une bonne endurance des pneumatiques. On peut donc considérer que les bourrelets comportent deux parties, une zone d'accrochage dont les parois sont destinées à venir en contact avec le siège et le crochet de la jante et, radialement extérieurement, une zone de transition adjacente aux flancs. Dans la zone d'accrochage du bourrelet sont aussi disposés les moyens d'ancrage des carcasses.

Le brevet EP 0 582 196 présente un pneumatique comportant une bande de roulement prolongée par deux flancs et deux bourrelets ainsi qu'une carcasse ancrée dans les deux bourrelets à un renforcement annulaire. La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire. Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité.

Le mode d'ancrage de la carcasse de ce pneumatique a l'avantage d'éviter la variation brutale de rigidité due à l'extrémité du retournement de la carcasse. L'évolution de rigidité entre la zone d'accrochage de la carcasse et les flancs peut ainsi être beaucoup plus progressive.

Le document JP-04 278 803 présente un pneumatique correspondant au préambule de la revendication 1.

L'invention a pour objet un pneumatique dont la structure des bourrelets et des flancs est encore perfectionnée pour améliorer sa qualité et ses performances sans compliquer sa réalisation.

Dans ce qui suit, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou préencollage pour favoriser l'adhésion sur le caoutchouc.

On entend par « couche de gomme de liaison » pour une nappe de renforcement donnée le mélange caoutchoutique en contact avec les fils de renforcement de la nappe, adhérant à ceux-ci et remplissant les interstices entre fils adjacents. Dans la pratique industrielle courante, pour une nappe carcasse donnée, on utilise une même qualité de gomme de liaison pour les différentes zones du pneumatique.

On entend par « contact » entre un fil et une couche de gomme de liaison, le fait que, au moins, une partie de la circonférence extérieure du fil est en contact intime avec le mélange caoutchoutique constituant de la gomme de liaison.

On appelle « flancs », les parties du pneumatique de faible rigidité de flexion situées entre le sommet et les bourrelets. On appelle «mélanges flancs » les mélanges caoutchoutiques situés axialement extérieurement relativement aux fils de renforcement de la carcasse et à leur gomme de liaison. Ces mélanges ont un bas module d'élasticité. Les flancs ne comportent pas usuellement de renforcement autre que la carcasse.

On appelle « bourrelet », la partie du pneumatique adjacente radialement intérieurement au flanc. On peut distinguer dans un bourrelet deux parties, une « zone d'accrochage » dont les parois radialement intérieure et axialement extérieure sont destinées à venir en contact, lors de l'utilisation du pneumatique, avec un siège et un crochet de jante et, radialement extérieurement, une « zone de transition » adjacente au flanc. Dans la zone d'accrochage, sont disposés aussi les moyens d'ancrage des carcasses. Ces moyens sont usuellement un renforcement annulaire qui peut être une tringle, des piles de fils circonférentiels ou tout autre moyen.

La zone de transition du bourrelet constitue une partie intermédiaire entre la zone d'accrochage et le flanc dont la rigidité de flexion diminue progressivement au fur et à mesure que l'on se rapproche du flanc. Cette partie comprend notamment des gommes de remplissages appelés « bourrages ». Classiquement dans cette zone de transition du bourrelet, un mélange flanc constitue la protection la plus extérieure contre les agressions mécaniques et atmosphériques. Nous conviendrons que la limite entre la zone de transition du bourrelet et le flanc correspond à la limite radialement extérieure des bourrages. La limite entre les zones de transition et d'accrochage du bourrelet correspond radialement à la hauteur radiale du crochet de la jante sur laquelle le pneumatique est destiné à être monté. Cependant, lorsque des éléments de renforcement annulaire dépassent cette limite radiale, nous conviendrons que la limite entre les zones de transition et d'accrochage du bourrelet correspond à la limite radialement extérieure du renforcement annulaire d'ancrage des carcasses.

Par «module d'élasticité » d'un mélange caoutchoutique, on entend un module d'extension sécant obtenu à une déformation d'extension uniaxiale de l'ordre de 10 % à température ambiante.

Le pneumatique selon invention comporte une bande de roulement prolongée par deux flancs et deux bourrelets, chaque bourrelet ayant une zone d'accrochage et une zone de transition, ainsi qu'une carcasse ancrée dans les deux bourrelets, ladite carcasse étant constituée de fils. Ce pneumatique est caractérisé en ce que, dans au moins une partie de ladite zone de transition des bourrelets, les fils de renforcement de la carcasse disposés axialement le plus vers l'extérieur du pneumatique sont en contact, du côté desdits fils vers l'extérieur du pneumatique, avec une couche de gomme de liaison de module d'élasticité élevé et les fils de renforcement de la carcasse disposés axialement le plus vers l'intérieur du pneumatique sont en contact, du côté vers l'intérieur du pneumatique, avec une couche de gomme de liaison de module d'élasticité inférieur et en ce que, dans au moins une partie desdits flancs, les fils de renforcement de la carcasse disposés axialement le plus vers l'extérieur du pneumatique sont en contact, du côté desdits fils vers l'extérieur du pneumatique, avec une couche de gomme de liaison de module d'élasticité inférieur à celui de ladite couche de gomme de liaison de module d'élasticité élevé et les fils de renforcement de la carcasse disposés axialement le plus vers l'intérieur du pneumatique sont en contact, du côté vers l'intérieur du pneumatique, avec une couche de gomme de liaison de module d'élasticité inférieur à celui de ladite couche de gomme de liaison de module d'élasticité élevé.

De préférence, la couche de gomme de liaison de module d'élasticité élevé a un module d'élasticité qui peut aller de moyen à très haut.

La couche de gomme de liaison de module d'élasticité élevé située dans les zone de transition des bourrelets du côté axialement extérieur du pneumatique relativement aux fils de renforcement de carcasse a l'avantage de coopérer avec ces fils de renforcement pour obtenir une rigidité circonférentielle élevée de l'ensemble. Cette rigidité élevée contribue à limiter les glissements entre la paroi extérieure du bourrelet et le crochet de jante lors du roulage sans pénaliser l'endurance du bourrelet du côté intérieur des fils de renforcement de la carcasse où les couches de gomme de liaison subissent des sollicitations d'extension radiale notables. Il en résulte ainsi un gain marqué en endurance du pneumatique.

Selon un mode de réalisation préférentiel de l'invention, dans au moins une partie de la zone de transition du bourrelet, les couches de gomme de liaison en contact avec les fils de renforcement de la carcasse disposés axialement le plus vers l'extérieur du pneumatique, du côté desdits fils vers l'extérieur du pneumatique, sont constituées par au moins un mélange de bourrage adjacent axialement extérieurement auxdits fils de renforcement.

Cette solution procure aux mélanges de bourrages concernés un rôle complémentaire, celui de gomme de liaison avec les fils de renforcement de la carcasse. La diminution de la diversité des mélanges simplifie la fabrication du pneumatique sans préjudice pour les performances grâce à l'architecture proposée.

Avantageusement, les couches de gomme de liaison en contact avec les fils de renforcement de la carcasse du côté desdits fils vers l'extérieur du pneumatique sont constituées par au moins deux mélanges de bourrage de modules d'élasticité différents et adjacents axialement extérieurement auxdits fils de renforcement, la zone de contact entre le mélange de bourrage de plus bas module d'élasticité et les fils de renforcement étant décalée axialement extérieurement relativement à la zone de contact entre le mélange de bourrage de plus haut module d'élasticité et les fils de renforcement.

Le mélange de bourrage de plus bas module d'élasticité et adjacent extérieurement aux fils de renforcement de la carcasse peut avoir un module d'élasticité moyen ou haut. Et le mélange de bourrage de plus haut module d'élasticité et adjacent extérieurement aux fils de renforcement de la carcasse peut avoir un module d'élasticité haut ou très haut.

L'invention est maintenant décrite à l'aide du dessin annexé dans lequel :
- la figure 1 présente en coupe transversale partielle un bourrelet et un flanc d'un pneumatique selon l'invention;
- la figure 2 présente une variante du pneumatique de la figure 1;
- la figure 3 présente un second mode de réalisation d'un pneumatique selon l'invention;
- la figure 4 présente une variante du pneumatique de la figure 3;
- la figure 5 présente une seconde variante du pneumatique de la figure 3;
- la figure 6 présente une troisième variante du pneumatique de la figure 3;
- la figure 7 présente un quatrième variante du pneumatique de la figure 3.

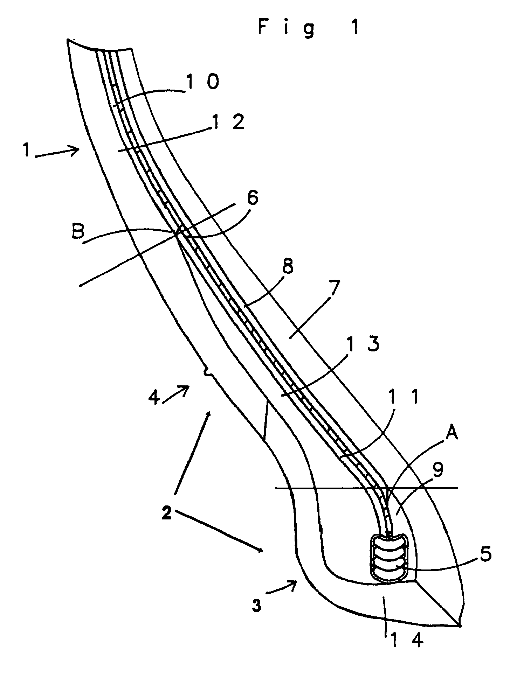

A la figure 1 est présenté, en coupe transversale partielle, un bourrelet et un flanc d'un pneumatique selon l'invention. Ce pneumatique comprend un flanc 1 adjacent à un bourrelet 2. Le bourrelet 2 présente une zone d'accrochage 3 et une zone de transition 4 adjacente au flanc 1. La zone d'accrochage comprend une tringle 5 autour de laquelle est ancrée une carcasse 6. Les fils de renforcement de la carcasse 6 forment des boucles qui entourent la tringle 5, ce qui rend inutile la présence d'un retournement classique de la carcasse dans le bourrelet. Une telle carcasse peut notamment être réalisée avec les dispositifs décrits dans le brevet EP 0 243 851. La limite indiquée entre la zone d'accrochage 3 et la zone de transition 4 correspond sensiblement à la hauteur radiale du crochet de la jante sur laquelle le pneumatique est destiné à être monté. La référence 7 correspond à un ensemble de mélanges disposé sur l'ensemble de la paroi interne du pneumatique, parmi ceux-ci se trouve usuellement un mélange imperméable aux gaz appelé « gomme intérieure ». On trouve ensuite une première couche de gomme de liaison 8 des fils de renforcement de la carcasse 6. Cette couche 8 est disposée axialement intérieurement relativement à la carcasse 6 et s'étend sur l'ensemble du flanc 1 et sur la zone de transition 4 jusqu'à un point A disposé radialement au-dessus de la tringle 5, dans la zone d'accrochage et sensiblement à la limite entre cette zone d'accrochage et la zone de transition. Cette couche 8 a un bas module d'élasticité. Les fils de renforcement de la carcasse 6 sont ensuite axialement intérieurement en contact avec un mélange caoutchoutique 9 de haut module d'élasticité. Le point A de contact entre les couches de gommes de liaison 8 et 9 est toujours situé dans une zone où l'amplitude des extensions radiales lors des diverses sollicitations en roulage reste très faible. De préférence, la distance radiale entre le point A et la paroi inférieure de la zone d'accrochage 3 du bourrelet 2 est inférieure à la hauteur radiale du crochet de la jante destinée à recevoir le pneumatique selon l'invention.

Du côté axialement extérieur de la carcasse 6, on trouve une couche de gomme de liaison 10 de bas module d'élasticité. Cette couche 10 s'étend sur l'ensemble du flanc 1. Ensuite, on trouve une couche de gomme de liaison 11 de haut module d'élasticité qui s'étend dans toute la zone de transition 4 du bourrelet 2. Axialement extérieurement relativement à la couche 10, il y a un mélange de flanc 12 de bas module d'élasticité. Axialement extérieurement relativement à la couche 11, on trouve un mélange de bourrage 13 de haut module d'élasticité. Le point B qui sépare le flanc et la zone de transition 4 du bourrelet 2 correspond sensiblement au point où s'arrête radialement le mélange 13. Le mélange de flanc 12 s'étend radialement dans la zone de transition 4 du bourrelet 2 axialement extérieurement relativement au mélange de bourrage 13. Cette structure permet d'avoir une excellente progressivité de la rigidité entre le bourrelet et le flanc ce qui donne une excellente résistante en endurance de cette partie du pneumatique. Dans la partie radialement inférieure de la zone de transition 4 et la zone d'accrochage 3 du bourrelet 2, il y a enfin un mélange de moyen module d'élasticité 14 destiné à venir en contact contre le crochet et le siège de jante. Ce mélange est usuellement spécialement conçu pour offrir une très bonne résistance à l'usure provoquée par ce contact avec le crochet et le siège de jante.

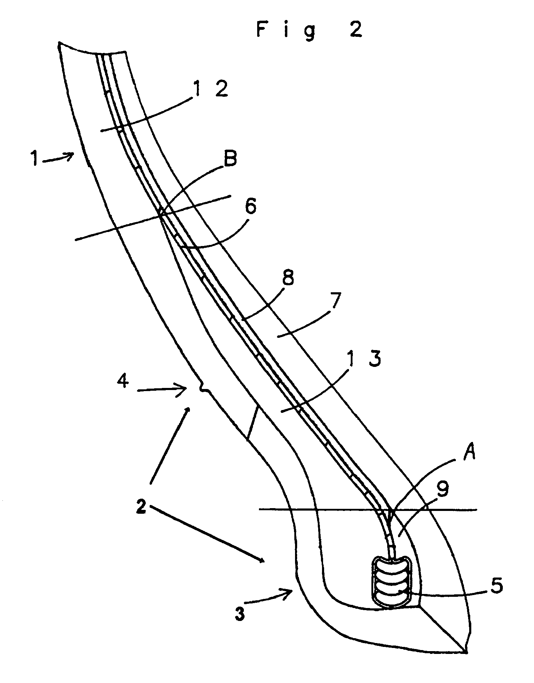

La figure 2 présente une variante de réalisation du pneumatique de la figure 1. Dans cette variante, on constate que les couches de gomme de liaison des fils de renforcement de la carcasse 6 sont constitués par la paroi axialement intérieure des mélanges de flanc 12 et de bourrage 13. Il n'y a donc pas de couche de gomme de liaison spécifique du côté axialement extérieur de la carcasse 6. Cette structure permet d'avoir une excellente imprégnation des fils de renforcement de la carcasse 6 par les mélanges 12 et 13 lors de la cuisson du pneumatique tout en conservant d'excellentes performances de rigidité longitudinale dans la zone de transition 4 du bourrelet 2. Cette structure a aussi l'avantage de diminuer le nombre de poses de couches de mélanges caoutchoutiques lors de la confection du pneumatique ce qui est très intéressant pour diminuer son coût de fabrication.

Dans ce premier mode de réalisation illustré par les figures 1 et 2, les mélanges de bas module d'élasticité ont un module d'élasticité inférieur à 6 MPa et de préférence compris entre 2 et 5 MPa. Les mélanges de haut module d'élasticité ont un module compris entre 12 et 25 MPa. Les couches 9 et 11 peuvent aussi avoir un très haut module d'élasticité, supérieur à 25 MPa voire à 30 MPa.

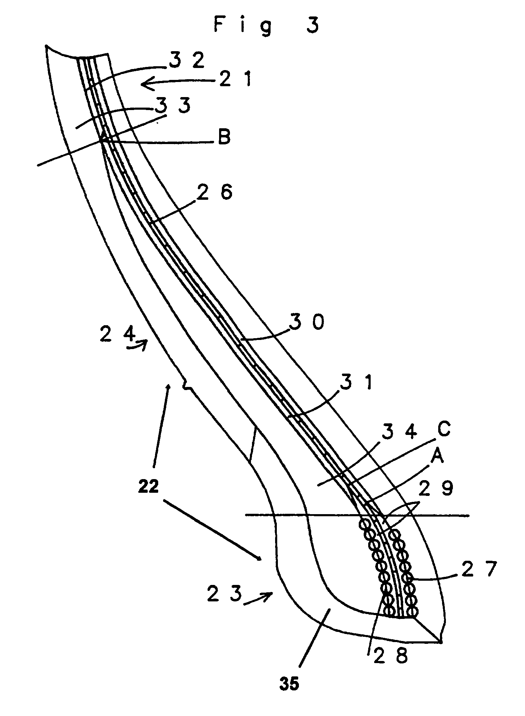

A la figure 3 est présenté un autre mode de réalisation d'un pneumatique selon l'invention dont la structure est proche de celle décrite dans le brevet EP 0 582 196. Dans ce pneumatique, la carcasse 26 est ancrée dans la zone d'accrochage 23 du bourrelet 22 par des piles 27, 28 de fils circonférentiels avec interposition entre ces piles et les fils de renforcement de la carcasse 26 d'une couche de gomme de liaison 29 de très haut module d'élasticité, soit de module d'élasticité supérieur à 25 MPa et de préférence supérieur à 30 MPa. Une telle carcasse peut notamment être réalisée avec les dispositifs décrits dans le brevet EP 0 580 055. Les couches de gomme de liaison des fils de renforcement de la carcasse 26 dans la zone d'accrochage 23 du bourrelet 22 sont donc constituées par ce mélange 29 de très haut module d'élasticité. Dans la partie radialement inférieure de la zone de transition 24 et la zone d'accrochage 23 du bourrelet 22, il y a un mélange de moyen module d'élasticité 35 destiné à venir en contact contre le crochet et le siège de jante. Ce mélange est usuellement spécialement conçu pour offrir une très bonne résistance à l'usure.

Du côté axialement intérieur, à partir du point A, limite radialement extérieure de la couche de gomme de liaison de très haut module d'élasticité 29, on trouve, comme précédemment, une couche de gomme de liaison 30 de bas module d'élasticité qui s'étend radialement sur pratiquement l'ensemble de la zone de transition 24 du bourrelet 22 et sur tout le flanc 21.

Du côté radialement extérieur, à partir du point C, limite radialement extérieure de la couche de gomme de liaison de très haut module d'élasticité 29, on trouve, comme précédemment, une couche de gomme de liaison 31 de haut ou moyen module d'élasticité qui s'étend radialement sur pratiquement l'ensemble de la zone de transition 24 du bourrelet 22 jusqu'à sensiblement le point B où commence le flanc 21. La limite entre la couche 31 et la couche 32 de moyen ou bas module d'élasticité se situe préférentiellement en B, mais peut aussi être décalée de part et d'autre de quelques millimètres. Dans d'autres modes de réalisation de l'invention, cette limite peut aussi se situer sensiblement plus bas radialement. Dans le flanc 21, la couche de gomme de liaison 32 est constituée par un mélange de module d'élasticité moyen ou bas. Dans cet exemple, la couche 31 de haut module d'élasticité a un module d'élasticité compris entre 12 et 25 MPa. La couche 32 a un module inférieur à 6 MPa et de préférence compris entre 2 et 5 MPa (module d'élasticité bas) ou compris entre 6 et 12 MPa (module d'élasticité moyen). Lorsque la couche 31 a un module d'élasticité moyen, la couche 32 a un module d'élasticité bas, et lorsque la couche 31 a un module d'élasticité haut, la couche 32 peut avoir un module d'élasticité moyen ou bas selon les cas.

Dans l'exemple de réalisation présenté, les points A et C se situent dans la zone de transition 24 du bourrelet 22. Selon le cas, ils peuvent aussi se situer à la limite entre la zone d'accrochage 23 et la zone de transition 24 ou dans la zone d'accrochage 23 du bourrelet 22.

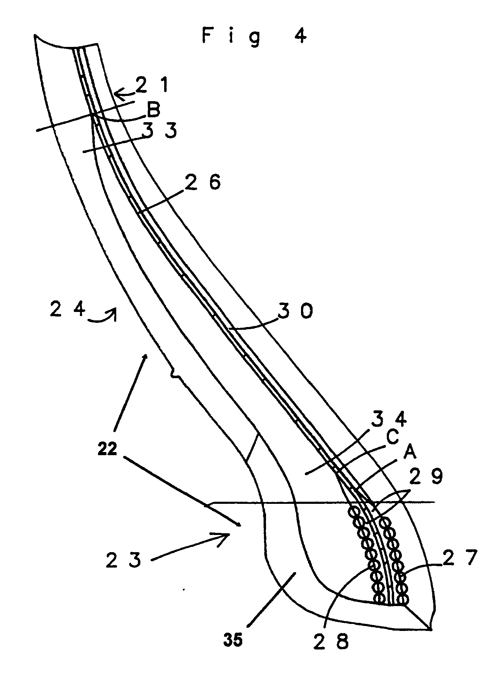

La figure 4 présente une variante de réalisation du pneumatique de la figure 3 dans lequel les couches de gomme de liaison disposées axialement extérieurement aux fils de renforcement de la carcasse 26 sont constitués par les mélanges de flancs 33 de bas module d'élasticité et de bourrage 34 de haut module d'élasticité. Comme précédemment, cette variante est très avantageuse pour faciliter la fabrication de ce pneumatique.

Des essais pour des pneumatiques 185/65 x 14, ont montré que le remplacement dans la zone de transition des bourrelets, du côté des fils de renforcement de la carcasse axialement vers l'extérieur du pneumatique, d'une gomme de liaison de bas module par une gomme de liaison de haut module d'élasticité constituée comme dans les exemples illustrés aux figures 1 à 4, a permis une augmentation de plus de 10 % des rigidités longitudinale et transversale du pneumatique.

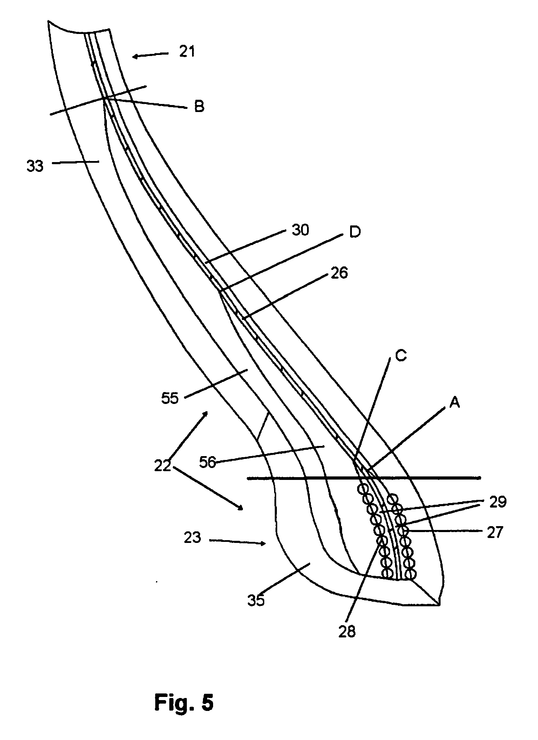

La figure 5 présente une seconde variante de réalisation du pneumatique de la figure 4. Les fils de renforcement de la carcasse 26 sont en contact, successivement, de la zone d'accrochage jusqu'aux flancs, du côté vers l'extérieur du pneumatique, avec un premier mélange de très haut module d'élasticité 29, puis avec un premier bourrage 56 de haut module d'élasticité (de C à D), puis avec un second bourrage 55 de moyen module d'élasticité (de D à B) et enfin, dans la zone des flancs avec un mélange flanc 33 de bas module d'élasticité. Les zones de contact entre les fils de renforcement et les deux bourrages de modules d'élasticités différents sont décalées radialement de telle sorte que la zone de contact entre le bourrage de haut module d'élasticité (de C à D) soit la plus proche de la zone d'accrochage du bourrelet. Cette variante a l'avantage d'améliorer la progressivité de la diminution de la rigidité en flexion de la zone de transition du pneumatique, tout en, comme précédemment, facilitant sa fabrication en raison du nombre inférieur de ses constituants.

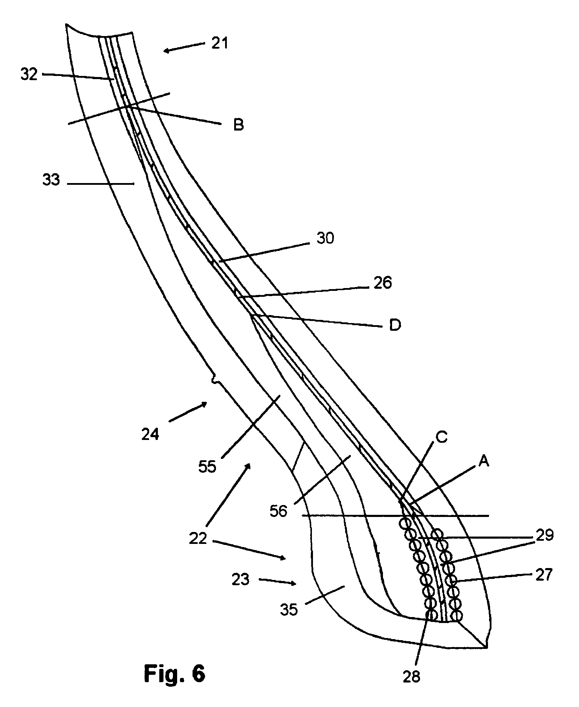

La figure 6 présente une autre variante du pneumatique selon l'invention, proche de celle illustrée par la figure 5. Le bourrelet de ce pneumatique est quasiment identique à celui de la figure 5. La différence entre ces deux pneumatiques est liée à ce que, dans les flancs, est disposée une couche 32 de gomme de liaison de moyen ou bas module d'élasticité disposée au contact des fils de renforcement de la carcasse 26, du côté de ces fils vers l'extérieur du pneumatique. Cette couche de gomme de liaison 32 vient recouvrir l'extrémité radialement extérieure B du second bourrage 55 qui sert de gomme de liaison dans la zone de transition adjacente au flanc.

Ce mode de réalisation semble en retrait par rapport au précédent en ce qui concerne la facilité de fabrication du pneumatique, il peut cependant se révéler avantageux d'inclure cette couche de gomme de liaison au niveau des flancs du côté extérieur des fils de renforcement de la carcasse en raison du coût élevé de tous les agents de protection contre l'ozone et l'oxygène usuellement présents dans les mélanges flancs. Cette solution peut aussi permettre une optimisation de l'adhésion sur les fils de renfort de la carcasse, si nécessaire.

Des essais d'endurance des bourrelets - test de roulage ligne droite sous forte charge et forte pression de gonflage - ont été réalisés pour des pneumatiques 185/65 x 14 correspondant aux variantes de réalisation présentées aux figures 5 et 6. Ces pneumatiques ont été comparés à des témoins comportant une couche de gomme de liaison de bas module d'élasticité du côté axialement extérieur des fils de carcasse sur l'ensemble des zones de transition des bourrelets et des flancs. On a constaté pour les pneumatiques correspondant aux variantes des figures 5 et 6 une augmentation de durée de vie d'un facteur 3 à 4.

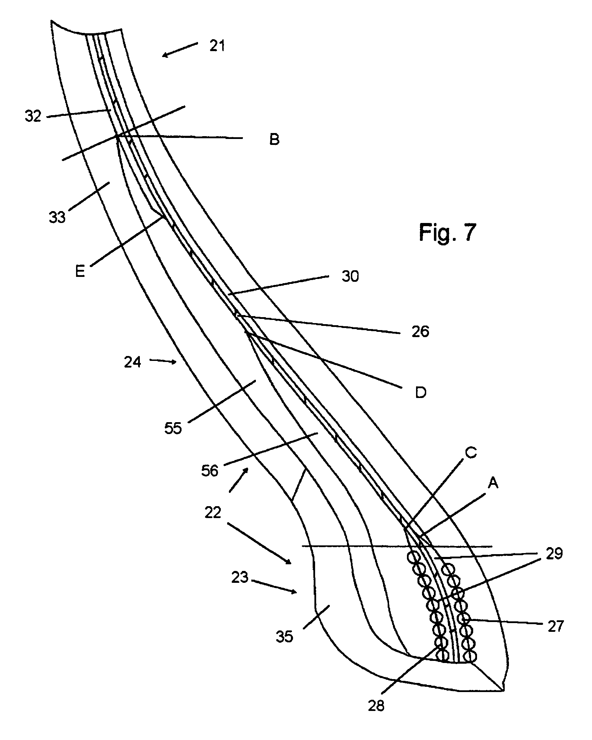

La figure 7 présente un mode de réalisation alternatif du pneumatique illustré par la figure 6. Dans ce mode de réalisation, c'est l'extrémité radialement extérieure du bourrage 55 qui recouvre l'extrémité radialement intérieure de la couche de gomme de liaison 32 de moyen ou bas module d'élasticité disposée au contact des fils de renforcement de la carcasse 26 dans les flancs et du côté vers l'extérieur du pneumatique. En conséquence, dans ce mode de réalisation, la limite radialement intérieure de la couche de gomme de liaison de bas module d'élasticité se situe au point E dans la zone de transition du bourrelet au lieu d'être pratiquement à la limite entre le flanc et la zone de transition du bourrelet. Dans d'autres modes de réalisation, cette limite E peut aussi se situer jusqu'au point D, voire au-dessous jusqu'au milieu entre D et C.

Pour réaliser les différents pneumatiques selon l'invention, il est très avantageux de les confectionner sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0 264 600 pour mettre en place les gommes. Le pneumatique peut être moulé et vulcanisé comme exposé dans le brevet US 4 895 692.

Les pneumatiques selon l'invention peuvent comporter une carcasse composée d'un seul alignement circonférentiel de fils de renforcement ancrés dans les deux bourrelets du pneumatique, dans ce cas les fils de renforcement de la carcasse sont en contact radialement extérieurement avec les couches de gomme de liaison telles que décrites précédemment. Ces pneumatiques peuvent aussi comporter une carcasse composée de plusieurs alignements circonférentiels de fils de renforcement ancrés dans les deux bourrelets. Dans ce cas, seuls, bien entendu, les fils de renforcement appartenant à l'alignement circonférentiel disposé radialement le plus à l'extérieur du pneumatique ou le plus à l'intérieur du pneumatique sont en contact avec les couches de gomme de liaison telles que précédemment décrites.

## Revendications

1. Pneumatique comportant une bande de roulement prolongée par deux flancs (1, 21) et deux bourrelets (2, 22), chaque bourrelet (2, 22) ayant une zone d'accrochage (3, 23) et une zone de transition (4, 24), une carcasse (6, 26) ancrée dans les deux bourrelets, ladite carcasse (6, 26) étant composée essentiellement de fils de renforcement, dans au moins une partie de ladite zone de transition (4, 24) des bourrelets (2, 22), les fils de renforcement de la carcasse disposés axialement le plus vers l'extérieur du pneumatique sont en contact, du côté desdits fils vers l'extérieur du pneumatique, avec une couche de gomme de liaison (11, 13, 31, 34, 56) de module d'élasticité élevé et les fils de renforcement de la carcasse disposés axialement le plus vers l'intérieur du pneumatique sont en contact, du côté vers l'intérieur du pneumatique, avec une couche de gomme de liaison (8, 30) de module d'élasticité inférieur, et **caractérisé en ce que** dans au moins une partie desdits flancs (1, 21), les fils de renforcement de la carcasse disposés axialement le plus vers l'extérieur du pneumatique sont en contact, du côté desdits fils vers l'extérieur du pneumatique, avec une couche de gomme de liaison (10, 12, 32, 33) de module d'élasticité inférieur à celui de ladite couche de gomme de liaison de module d'élasticité élevé et les fils de renforcement de la carcasse disposés axialement le plus vers l'intérieur du pneumatique sont en contact, du côté vers l'intérieur du pneumatique, avec une couche de gomme de liaison (8, 30) de module d'élasticité inférieur à celui de ladite couche de gomme de liaison de module d'élasticité élevé.

2. Pneumatique selon la revendication 1, dans lequel la couche de gomme de liaison de module d'élasticité élevé a un module d'élasticité moyen.

3. Pneumatique selon la revendication 1, dans lequel la couche de gomme de liaison de module d'élasticité élevé a un haut module d'élasticité.

4. Pneumatique selon la revendication 1, dans lequel la couche de gomme de liaison de module d'élasticité élevé a un très haut module d'élasticité.

5. Pneumatique selon l'une des revendications 1 à 4, dans lequel, dans au moins une partie de la zone de transition du bourrelet, les couches de gomme de liaison en contact avec les fils de renforcement de la carcasse disposés axialement le plus vers l'extérieur du pneumatique, du côté desdits fils vers l'extérieur du pneumatique, sont constituées par au moins un mélange de bourrage (13, 34, 55, 56) adjacent axialement extérieurement auxdits fils de renforcement.

6. Pneumatique selon la revendication 5, dans lequel, dans au moins une partie de la zone de transition du bourrelet, les couches de gomme de liaison en contact avec les fils de renforcement de la carcasse du côté desdits fils vers l'extérieur du pneumatique sont constituées par au moins deux mélanges de bourrage (55, 56) de modules d'élasticité différents et adjacents axialement extérieurement auxdits fils de renforcement, la zone de contact entre le mélange de bourrage (55) de plus bas module d'élasticité et les fils de renforcement étant décalée radialement extérieurement relativement à la zone de contact entre le mélange de bourrage (56) de plus haut module d'élasticité et les fils de renforcement.

7. Pneumatique selon l'une des revendications 1 à 6, dans lequel le mélange de bourrage (55) de plus bas module d'élasticité et adjacent extérieurement aux fils de renforcement de la carcasse a un module d'élasticité moyen.

8. Pneumatique selon l'une des revendications 1 à 7, dans lequel le mélange de bourrage (56) de plus haut module d'élasticité et adjacent extérieurement aux fils de renforcement de la carcasse a un haut module d'élasticité.

9. Pneumatique selon l'une des revendications 1 à 8, dans lequel le mélange de bourrage (56) de plus haut module d'élasticité et adjacent extérieurement aux fils de renforcement de la carcasse a un très haut module d'élasticité.

10. Pneumatique selon l'une des revendications 1 à 9, dans lequel les couches de gomme de liaison (10, 12, 32, 33) en contact avec les fils de renforcement de la carcasse (6, 26) disposés axialement le plus vers l'extérieur du pneumatique, dans au moins une partie des flancs, ont un bas module d'élasticité.

11. Pneumatique selon l'une des revendications 1 à 10, dans lequel les couches de gomme de liaison (10, 12, 32, 33) en contact avec les fils de renforcement de la carcasse (6, 26) disposés axialement le plus vers l'extérieur du pneumatique, dans au moins une partie des flancs, ont un module d'élasticité moyen.

12. Pneumatique selon l'une des revendication 1 à 11, dans lequel les couches de gomme de liaison en contact avec les fils de renforcement de la carcasse disposés axialement le plus vers l'extérieur du pneumatique, dans au moins une partie des flancs, sont constituées par le mélange de flanc (12, 33) adjacent extérieurement dans ces parties auxdits fils de renforcement de la carcasse.

13. Pneumatique selon l'une des revendications 1 à 12, dans lequel les gommes de liaison de très haut module d'élasticité ont un module d'élasticité supérieur à 25 MPa.

14. Pneumatique selon l'une des revendications 1 à 13, dans lequel les gommes de liaison de haut module d'élasticité ont un module d'élasticité compris entre 12 et 25 MPa.

15. Pneumatique selon l'une des revendications 1 à 14, dans lequel les gommes de liaison de module d'élasticité moyen ont un module d'élasticité compris entre 6 et 12 MPa.

16. Pneumatique selon l'une des revendications 1 à 15, dans lequel les gommes de liaison de bas module d'élasticité ont un module d'élasticité inférieur à 6 MPa.

## Claims

1. Tire comprising a tread prolonged by two sidewalls (1, 21) and two beads (2, 22), each bead (2, 22) having a anchoring zone (3, 23) and a transition zone (4, 24), a carcass (6, 26) anchored in the two beads, the said carcass (6, 26) being composed essentially of reinforcing threads, wherein, in at least part of said transition zone (4, 24) of the beads (2, 22), the reinforcing threads of the carcass arranged axially most outwardly in the tyre are in contact, on the side of said threads toward the outside of the tyre, with a layer of bonding rubber (11, 13, 31, 34, 56) having an elevated modulus of elasticity and wherein the reinforcing threads of the carcass arranged axially most inwardly in the tyre are in contact, on the side toward the inside of the tyre, with a layer of bonding rubber (8, 30) having a lower modulus of elasticity, **characterized in that,** in at least part of the said sidewalls (1, 21), the reinforcing threads of the carcass arranged axially most outwardly in the tyre are in contact, on the side of said threads toward the outside of the tyre, with a layer of bonding rubber (10, 12, 32, 33) having a modulus of elasticity lower than that of the said layer of bonding rubber having an elevated modulus of elasticity and the reinforcing threads of the carcass arranged axially most inwardly in the tyre are in contact, on the side toward the inside of the tyre, with a layer of bonding rubber (8, 30) having a modulus of elasticity lower than that of the said layer of bonding rubber having an elevated modulus of elasticity.

2. Tire according to Claim 1, wherein the layer of bonding rubber having an elevated modulus of elasticity has a medium modulus of elasticity.

3. Tire according to Claim 1, wherein the layer of bonding rubber having an elevated modulus of elasticity has a high modulus of elasticity.

4. Tire according to Claim 1, wherein the layer of bonding rubber having an elevated modulus of elasticity has a very high modulus of elasticity.

5. Tire according to any one of Claims 1 to 4, wherein, in at least part of the transition zone of the bead, the layers of bonding rubber in contact with the reinforcing threads of the carcass arranged axially most outwardly in the tyre, on the side of said threads toward the outside of the tyre, are composed of at least one filler mixture (13, 34, 55, 56) adjacent axially outwardly to said reinforcing threads.

6. Tire according to Claim 5, wherein, in at least part of the transition zone of the bead, the layers of bonding rubber in contact with the reinforcing threads of the carcass on the side of said threads toward the outside of the tyre are composed of at least two filler mixtures (55, 56) having unlike moduli of elasticity and adjacent axially outwardly to said reinforcing threads, the zone of contact between the filler mixture (55) having a lower modulus of elasticity and the reinforcing threads being staggered radially outwardly in relation to the zone of contact between the filler mixture (56) having a higher modulus of elasticity and the reinforcing threads.

7. Tire according to any one of Claims 1 to 6, wherein the filler mixture (55) having a lower modulus of elasticity and adjacent outwardly to the reinforcing threads of the carcass has a medium modulus of elasticity.

8. Tire according to any one of Claims 1 to 7, wherein the filler mixture (56) having a higher modulus of elasticity and adjacent outwardly to the reinforcing threads of the carcass has a high modulus of elasticity.

9. Tire according to any one of Claims 1 to 8, wherein the filler mixture (56) having a higher modulus of elasticity and adjacent outwardly to the reinforcing threads of the carcass has a very high modulus of elasticity.

10. Tire according to any one of Claims 1 to 9, wherein the layers of bonding rubber (10, 12, 32, 33) in contact with the reinforcing threads of the carcass (6, 26) arranged axially most outwardly in the tyre, in at least part of the sidewalls, have a low modulus of elasticity.

11. Tire according to any one of Claims 1 to 10, wherein the layers of bonding rubber (10, 12, 32, 33) in contact with the reinforcing threads of the carcass (6, 26) arranged axially most outwardly in the tyre, in at least part of the sidewalls, have a medium modulus of elasticity.

12. Tire according to any one of Claims 1 to 11, wherein the layers of bonding rubber in contact with the reinforcing threads of the carcass arranged axially most outwardly in the tyre, in at least part of the sidewalls, are composed of the sidewall mixture (12, 33) adjacent outwardly in said parts to said reinforcing threads of the carcass.

13. Tire according to any one of Claims 1 to 12, wherein the bonding rubbers having a very high modulus of elasticity have a modulus of elasticity greater than 25 MPa.

14. Tire according to any one of Claims 1 to 13, wherein the bonding rubbers having a high modulus of elasticity have a modulus of elasticity of between 12 and 25 MPa.

15. Tire according to any one of Claims 1 to 14, wherein the bonding rubbers having a medium modulus of elasticity have a modulus of elasticity of between 6 and 12 MPa.

16. Tire according to any one of Claims 1 to 15, wherein the bonding rubbers having a low modulus of elasticity have a modulus of elasticity of less than 6 MPa.

## Patentansprüche

1. Reifen mit einer Lauffläche, die durch zwei Seitenwände (1, 21) und zwei Wulste (2, 22) fortgesetzt ist, wobei jeder Wulst eine Verankerungszone (3, 23) und eine Übergangszone (4, 24) besitzt, einer Karkasse (6, 26), die in den beiden Wulsten verankert ist, wobei die Karkasse (6, 26) im Wesentlichen aus Verstärkungsfäden gebildet ist und wobei in wenigstens einem Teil der Übergangszone (4, 24) der Wulste (2, 22) die Verstärkungsfäden der Karkasse, die bezüglich des Reifens axial am weitesten außen angeordnet sind, auf der Seite der Fäden, die zur Außenseite des Reifens hin liegt, mit einer Gummiverbindungsschicht (11, 13, 31, 34, 56) mit höherem Elastizitätsmodul in Kontakt sind und die Verstärkungsfäden der Karkasse, die bezüglich des Reifens axial am weitesten innen angeordnet sind, auf der Seite, die zur Innenseite des Reifens hin liegt, mit einer Gummiverbindungsschicht (8, 30) mit niedrigerem Elastizitätsmodul in Kontakt sind, **dadurch gekennzeichnet, dass** in wenigstens einem Teil der Seitenwände (1, 21) die Verstärkungsfäden der Karkasse, die bezüglich des Reifens axial am weitesten außen angeordnet sind, auf der Seite der Fäden, die zur Außenseite des Reifens hin liegt, mit einer Gummiverbindungsschicht (10, 12, 32, 33) mit einem Elastizitätsmodul, der niedriger als jener der Gummiverbindungsschicht mit höherem Elastizitätsmodul ist, in Kontakt sind und die Verstärkungsfäden der Karkasse, die bezüglich des Reifens axial am weitesten innen angeordnet sind, auf der Seite, die zur Innenseite des Reifens hin liegt, mit einer Gummiverbindungsschicht (8, 30) mit einem Elastizitätsmodul, der niedriger als jener der Gummiverbindungsschicht mit höherem Elastizitätsmodul ist, in Kontakt sind.

2. Reifen nach Anspruch 1, wobei die Gummiverbindungsschicht mit höherem Elastizitätsmodul einen mittleren Elastizitätsmodul aufweist.

3. Reifen nach Anspruch 1, wobei die Gummiverbindungsschicht mit höherem Elastizitätsmodul einen hohen Elastizitätsmodul aufweist.

4. Reifen nach Anspruch 1, wobei die Gummiverbindungsschicht mit höherem Elastizitätsmodul einen sehr hohen Elastizitätsmodul aufweist.

5. Reifen nach einem der Ansprüche 1 bis 4, wobei in wenigstens einem Teil der Übergangszone des Wulstes die Gummiverbindungsschichten in Kontakt mit den Verstärkungsfäden der Karkasse, die axial am weitesten außen bezüglich des Reifens angeordnet sind, auf der Seite der Fäden, die zur Außenseite des Reifens hin liegt, aus wenigstens einer Wulstfüllermischung (13, 34, 55, 56) gebildet sind, die axial außen an die Verstärkungsfäden angrenzt.

6. Reifen nach Anspruch 5, wobei in wenigstens einem Teil der Übergangszone des Wulstes die Gummiverbindungsschichten in Kontakt mit den Verstärkungsfäden der Karkasse auf der Seite der Fäden, die zur Außenseite des Reifens hin liegt, aus wenigstens zwei axial außen an die Verstärkungsfäden angrenzenden Wulstfüllermischungen (55, 56) mit unterschiedlichen Elastizitätsmodulen gebildet sind, wobei die Zone des Kontakts zwischen der Wulstfüllermischung (55) mit dem niedrigeren Elastizitätsmodul und den Verstärkungsfäden in Bezug auf die Zone des Kontakts zwischen der Wulstfüllermischung (56) mit dem größeren Elastizitätsmodul und den Verstärkungsfäden radial nach außen verschoben ist.

7. Reifen nach einem der Ansprüche 1 bis 6, wobei die Wulstfüllermischung (55) mit dem niedrigeren Elastizitätsmodul, die außen an die Verstärkungsfäden der Karkasse angrenzt, einen mittleren Elastizitätsmodul aufweist.

8. Reifen nach einem der Ansprüche 1 bis 7, wobei die Wulstfüllermischung (56) mit dem größeren Elastizitätsmodul, die außen an die Verstärkungsfäden der Karkasse angrenzt, einen hohen Elastizitätsmodul aufweist.

9. Reifen nach einem der Ansprüche 1 bis 8, wobei die Wulstfüllermischung (56) mit dem größeren Elastizitätsmodul, die außen an die Verstärkungsfäden der Karkasse angrenzt, einen sehr hohen Elastizitätsmodul aufweist.

10. Reifen nach einem der Ansprüche 1 bis 9, wobei die Gummiverbindungsschichten (10, 12, 32, 33) in Kontakt mit den Verstärkungsfäden der Karkasse (6, 26), die axial am weitesten außen bezüglich des Reifens angeordnet sind, in wenigstens einem Teil der Seitenwände einen niedrigen Elastizitätsmodul aufweisen.

11. Reifen nach einem der Ansprüche 1 bis 10, wobei die Gummiverbindungsschichten (10, 12, 32, 33) in Kontakt mit den Verstärkungsfäden der Karkasse (6, 26), die axial am weitesten außen bezüglich des Reifens angeordnet sind, in wenigstens einem Teil der Seitenwände einen mittleren Elastizitätsmodul aufweisen.

12. Reifen nach einem der Ansprüche 1 bis 11, wobei die Gummiverbindungsschichten in Kontakt mit den Verstärkungsfäden der Karkasse, die axial am weitesten außen bezüglich des Reifens angeordnet sind, in wenigstens einem Teil der Seitenwände aus der Seitenwandmischung (12, 33) gebildet sind, die außen in diesen Teilen an die Verstärkungsfäden der Karkasse angrenzt.

13. Reifen nach einem der Ansprüche 1 bis 12, wobei die Gummimischungen mit sehr hohem Elastizitätsmodul einen Elastizitätsmodul größer als 25 MPa aufweisen.

14. Reifen nach einem der Ansprüche 1 bis 13, wobei die Gummimischungen mit hohem Elastizitätsmodul einen Elastizitätsmodul im Bereich zwischen 12 und 25 MPa aufweisen.

15. Reifen nach einem der Ansprüche 1 bis 14, wobei die Gummimischungen mit mittlerem Elastizitätsmodul einen Elastizitätsmodul im Bereich zwischen 6 und 12 MPa aufweisen.

16. Reifen nach einem der Ansprüche 1 bis 15, wobei die Gummimischungen mit niedrigem Elastizitätsmodul einen Elastizitätsmodul kleiner als 6 MPa aufweisen.
